# EUROPÄISCHE PATENTSCHRIFT

(11) **EP 4 106 593 B1**
(45) Veröffentlichungstag und Bekanntmachung des Hinweises auf die Patenterteilung: **03.04.2024**
(21) Anmeldenummer: 21708167.8
(22) Anmeldetag: 22.02.2021
(51) Int. Cl.: A47L 9/00, B62B 3/00

(54) **SCHUBLADENVORRICHTUNG FÜR EINEN REINIGUNGSWAGEN UND REINIGUNGSWAGEN MIT EINER SCHUBLADENVORRICHTUNG**
DRAWER EQUIPMENT FOR A CLEANING TROLLEY AND CLEANING TROLLEY WITH A DRAWER DEVICE
DISPOSITIF DE TIROIRS POUR UN CHARIOT DE NETTOYAGE ET CHARIOT DE NETTOYAGE AVEC UN DISPOSITIF DE TIROIRS

(30) Priorität: 21.02.2020 DE 102020104583
(43) Veröffentlichungstag der Anmeldung: 28.12.2022
(73) Patentinhaber: Alfred Kärcher SE & Co. KG, 71364 Winnenden (DE)
(72) Erfinder: ARMBRUSTER, Patrick, 71364 Winnenden (DE); BURCHARD, Jochen, 71364 Winnenden (DE); DAMMKÖHLER, Denis, 71364 Winnenden (DE); DOBLER, Kamila, 71364 Winnenden (DE); GUEGERCIN, Beyza, 71364 Winnenden (DE); JAHN, Marten, 71364 Winnenden (DE); KUHN, Jens, 71364 Winnenden (DE); MANISCALCO, Calogero, 71364 Winnenden (DE)
(74) Vertreter: DTS Patent- und Rechtsanwälte Schnekenbühl und Partner mbB
(86) Internationale Anmeldenummer: PCT/EP2021/054266
(87) Internationale Veröffentlichungsnummer: WO 2021/165520

(56) Entgegenhaltungen:
- EP-A1- 2 974 708
- US-A1- 2014 300 260
- US-A1- 2016 128 471

## Beschreibung

Die vorliegende Erfindung betrifft eine Schubladenvorrichtung für einen Reinigungswagen, umfassend eine Schublade mit einem Aufnahmeraum, mindestens eine Führungseinrichtung, über die die Schublade am Reinigungswagen von einer eingeschobenen Stellung entlang einer Auszugsrichtung in eine Auszugsstellung verschiebbar ist, und mindestens ein Kopplungselement zum Koppeln der Schublade mit der Führungseinrichtung.

Außerdem betrifft die vorliegende Erfindung einen Reinigungswagen mit mindestens einer Schubladenvorrichtung.

Trotz moderner Reinigungsmaschinen insbesondere im Bereich der Innenreinigung, die zum Teil automatisiert sein können, sind Reinigungswagen im Bereich täglicher Reinigung von großer Bedeutung. Hervorzuheben sind insbesondere manuell durchzuführende Reinigungsaufgaben in größeren Gebäuden, zum Beispiel Bürogebäuden, Pflegeeinrichtungen, Krankenhäusern, Flughäfen, Veranstaltungsgebäuden oder dergleichen. Insbesondere manuell geführte Reinigungswerkzeuge und Reinigungsutensilien können mit einem Reinigungswagen mitgeführt werden. Behältnisse wie beispielsweise Eimer können zur Bevorratung von Reinigungszubehör, Reinigungsflüssigkeiten oder Reinigungschemikalien und/oder zur Aufnahme von Schmutzflüssigkeit oder Abfall vorgesehen sein. Üblicherweise umfassen die Reinigungswagen Rollen, so dass sie vom Benutzer über eine Aufstellfläche verfahren werden können.

Es sind Reinigungswagen bekannt, die mindestens eine Schubladenvorrichtung mit entlang einer Ausziehrichtung ausziehbarer Schublade aufweisen. Bei Bedarf kann der Benutzer die Schublade ausziehen und der Schublade Gegenstände entnehmen oder in dieser verstauen, um sie anschließend wieder entgegen der Auszugsrichtung einzuschieben.

Eine gattungsgemäße Schubladenvorrichtung ist in der US 2014/0300260 A1 beschrieben.

Aufgabe der vorliegenden Erfindung ist es, eine Schubladenvorrichtung der eingangs genannten Art und einen Reinigungswagen bereitzustellen, die bzw. der eine verbesserte Handhabbarkeit aufweisen.

Diese Aufgabe wird bei einer gattungsgemäßen Schubladenvorrichtung erfindungsgemäß dadurch gelöst, dass das mindestens eine Kopplungselement ein Schwenkelement ist, zur schwenkbaren Lagerung der Schublade an der mindestens einen Führungseinrichtung, wobei die Schublade in der Auszugsstellung relativ zur mindestens einen Führungseinrichtung um eine quer und insbesondere senkrecht zur Auszugsrichtung ausgerichtete Schwenkachse in eine Kippstellung schwenkbar ist.

Die Schublade der erfindungsgemäßen Schubladenvorrichtung kann zum einen über die mindestens eine Führungseinrichtung verschoben werden. Dabei kann sie insbesondere von der eingeschobenen Stellung in eine Auszugsstellung überführt werden. Zum anderen besteht die Möglichkeit, die Schublade ausgehend von der Auszugsstellung um die Schwenkachse zu schwenken. Das Kopplungselement wirkt als Schwenkelement für die schwenkbare Lagerung. Die Schwenkachse ist quer und insbesondere senkrecht zur Auszugsrichtung ausgerichtet. Günstigerweise kann die Schublade dem Benutzer entgegengeschwenkt werden, so dass dieser auf einfachere Weise in den Aufnahmeraum eingreifen kann. Dies verbessert die Handhabung der Schubladenvorrichtung. Darüber hinaus kann der Auszugweg durch die Möglichkeit der Verkippung der Schublade im Verhältnis zu herkömmlichen Schubladenvorrichtungen verkürzt werden, um einen Eingriff in den Aufnahmeraum zu ermöglichen. Dadurch kann die Schublade vorteilhafterweise weniger weit vom Reinigungswagen abstehen als die Schublade einer herkömmlichen Schubladenvorrichtung. Dies steigert die Manövrierfähigkeit des Reinigungswagens. Darüber hinaus ist die Gefahr unbeabsichtigten Anstoßens am Reinigungswagen verringert, wodurch die Betriebssicherheit gesteigert werden kann.

Vorteilhaft kann es sein, wenn die mindestens eine Führungseinrichtung mindestens ein Führungselement umfasst, mit dem das mindestens eine Schwenkelement schwenkbar verbunden ist, und mindestens einen Führungskörper, an dem das mindestens eine Führungselement entlang der Auszugsrichtung verschiebbar gelagert ist. Es zeigt sich in der Praxis, dass dadurch eine zuverlässige, verkantungsfreie Bewegung der Schublade sichergestellt werden kann. Das mindestens eine Führungselement ist beispielsweise ein Schieber, mit dem die Schublade schwenkbar verbunden ist und der mit einer korrespondierenden Führung am Führungskörper in Eingriff steht.

Vorteilhaft kann es sein, wenn die mindestens eine Führungseinrichtung mindestens einen Führungskörper umfasst, an dem das mindestens eine Schwenkelement entlang der Auszugsrichtung verschiebbar gelagert ist. Vorgesehen sein kann dementsprechend, dass das Schwenkelement direkt mit dem mindestens einen Führungskörper in Eingriff steht und abweichend von der vorstehend beschriebenen Ausführungsform kein zusätzliches Führungselement vorhanden ist.

Bei einer bevorzugten Ausführungsform der Erfindung ist der mindestens eine Führungskörper an einem Gehäuse des Reinigungswagens festgelegt oder festlegbar. Der Reinigungswagen, darauf wird nachfolgend noch eingegangen, kann beispielsweise ein Gehäuse umfassen, das auch als Korpus bezeichnet werden kann. Das Gehäuse umfasst beispielsweise Seitenwände, die miteinander direkt oder indirekt verbunden sein können. Beispielsweise sind Profilteile, auch als Holme bezeichnet, zwischen aneinander angrenzenden Seitenwänden angeordnet.

Vorgesehen sein kann, dass der mindestens eine Führungskörper an einer Seitenwand und/oder an einem Profilteil festgelegt oder festlegbar ist.

Der Führungskörper kann zum Beispiel durch eine Gehäusewand, insbesondere eine Seitenwand, des Reinigungswagens gebildet sein. Die Seitenwand kann dementsprechend einen Bestandteil der Schubladenvorrichtung bilden.

Der mindestens eine Führungskörper kann beispielsweise plattenförmig oder im Wesentlichen plattenförmig ausgestaltet sein.

Von Vorteil ist es, wenn am mindestens einen Führungskörper ein Anschlagelement für das mindestens eine Führungselement oder das mindestens eine Schwenkelement gebildet ist, an dem das Führungselement oder das Schwenkelement in der Auszugsstellung und/oder in der Kippstellung der Schublade anliegt. Je nachdem, wie die Führungseinrichtung ausgestaltet ist, kann das Führungselement oder das Schwenkelement, in Abwesenheit eines Führungselementes, am Anschlagelement des Führungskörpers anliegen. Dies definiert die Auszugsstellung und/oder die Kippstellung der Schublade in vorteilhafter Weise. Dabei nimmt das mindestens eine Schwenkelement bevorzugt eine bezüglich der eingeschobenen Stellung maximal in die Auszugsrichtung verschobene Position ein. Das Schwenken der Schublade kann auf diese Weise an eindeutig definierter Position beim Ausziehen der Schublade und/oder in eine eindeutig definierte Position erfolgen. Dies erleichtert die Handhabung der Schubladenvorrichtung.

Vorzugsweise sind an der Schublade und an der Führungseinrichtung und/oder am Reinigungswagen korrespondierende Anschlagelemente angeordnet, zum Begrenzen des Schwenkwinkels der Schublade beim Verschwenken von der Auszugsstellung in die Kippstellung. In der Kippstellung kann die Schublade dadurch eine definierte Position relativ zur Führungseinrichtung, beispielsweise zum mindestens einen Führungskörper und/oder zur Seitenwand einnehmen. Ein übermäßiges Verkippen, beispielsweise bei schwerer Beladung der Schublade, kann auf diese Weise vermieden werden. Die Handhabung der Schubladenvorrichtung ist dadurch erleichtert.

Vorgesehen sein kann, dass die mindestens eine Führungseinrichtung eine Teleskopführung umfasst oder ausbildet, zum Beispiel mit dem vorstehend genannten mindestens einen Führungselement.

Vorzugsweise ist das mindestens eine Schwenkelement an einem Seitenteil der Schublade angeordnet, bezogen auf eine Richtung quer und insbesondere senkrecht zur Auszugsrichtung. Dies ermöglicht eine seitliche Montage der Schublade am Reinigungswagen.

Günstig ist es, wenn die Schubladenvorrichtung zwei Führungseinrichtungen umfasst, zwischen denen die Schublade beispielsweise quer und insbesondere senkrecht zur Auszugsrichtung angeordnet ist, und ein jeweiliges Schwenkelement zum Koppeln mit einer der Führungseinrichtungen. An einander abgewandten Seiten der Schublade sind zum Beispiel zwei Schwenkelemente zum Koppeln jeweils mit einer Führungseinrichtung angeordnet. Dadurch kann über die Führungseinrichtungen eine seitliche Montage der Schublade am Reinigungswagen erfolgen. Durch die beidseitigen Führungseinrichtungen kann eine verkantungsfreie Bewegung der Schublade sichergestellt werden.

Darüber hinaus zeigt sich in der Praxis, dass bei seitlicher Montage der Schublade am Reinigungswagen die Kippbewegung der Schublade auf konstruktiv einfachere Weise umgesetzt werden kann.

Jede Führungseinrichtung kann beispielsweise einen Führungskörper umfassen. Der Führungskörper kann wie vorstehend erläutert beispielsweise an einem Gehäuse des Reinigungswagens festgelegt oder festlegbar sein. Dies gibt zum Beispiel die Möglichkeit, die Schubladenvorrichtung als Baueinheit, insbesondere vormontierte Baueinheit, bereitzustellen. Die Baueinheit kann bei der Montage des Reinigungswagens über die Führungskörper am Gehäuse des Reinigungswagens festgelegt werden.

Günstig ist es, wenn die Schubladenvorrichtung mindestens ein Stützelement umfasst, an dem die Schublade beim Verschieben über mindestens ein Auflageelement aufliegt. Dadurch kann eine robuste Konstruktion der Schubladenvorrichtung erzielt und eine zuverlässige Funktion sichergestellt werden, insbesondere auch bei schwerer Beladung der Schublade. Die Schublade umfasst mindestens ein Auflageelement. Dieses kann auf dem mindestens einen Stützelement aufliegen und dadurch von unten gestützt werden.

Positions- und Orientierungsangaben wie beispielsweise "unten", "unterhalb", "oben", "oberhalb" oder dergleichen sind vorliegend auf einen bestimmungsgemäßen Gebrauch der Schubladenvorrichtung und des Reinigungswagens bezogen aufzufassen. Der Reinigungswagen kann bestimmungsgemäß auf einer Aufstellfläche aufstehen, insbesondere über Rollen. Die Schublade ist so am Reinigungswagen montiert, dass auf den Aufnahmeraum von oben zugegriffen werden kann.

Als vorteilhaft erweist es sich, wenn das mindestens eine Auflageelement von einem Seitenteil der Schublade gebildet ist oder umfasst ist. Quer und insbesondere senkrecht zur Auszugsrichtung weist die Schublade vorteilhafterweise mindestens ein Seitenteil und daran das mindestens eine Auflageelement auf.

Das mindestens eine Auflageelement ist bevorzugt an einer Unterseite der Schublade angeordnet oder gebildet, insbesondere an einer Unterseite des Seitenteils. Dadurch kann die Schublade mit der Unterseite auf dem darunter angeordneten mindestens einen Stützelement aufliegen. Beispielsweise ist das mindestens eine Auflageelement durch eine untere Fläche oder untere Kante des Seitenteils gebildet oder daran angeordnet.

Von Vorteil ist es, wenn das mindestens eine Auflageelement bezogen auf die Auszugsrichtung einen dem mindestens einen Schwenkelement vorgelagerten Auflagebereich umfasst. Über den Auflagebereich kann die Schublade vorzugsweise in der eingeschobenen Stellung und beim Ausziehen auf dem mindestens einen Stützelement aufliegen und dadurch von unten gestützt werden.

Vorgesehen sein kann, dass das mindestens eine Auflageelement bezogen auf die Auszugsrichtung führend an der Schublade einen Auflagebereich zum Aufliegen auf dem mindestens einen Stützelement umfasst.

Günstig ist es, wenn das mindestens eine Auflageelement bezogen auf die Auszugsrichtung einen dem mindestens einen Schwenkelement nachgelagerten Auflagebereich umfasst. Über den Auflagebereich kann die Schublade vorzugsweise in der eingeschobenen Stellung und beim Ausziehen auf dem mindestens einen Stützelement aufliegen und dadurch von unten gestützt werden.

Vorgesehen sein kann, dass das mindestens eine Auflageelement bezogen auf die Auszugsrichtung hinten an der Schublade einen Auflagebereich zum Aufliegen auf dem mindestens einen Stützelement umfasst.

Günstig ist es, wenn am mindestens einen Auflageelement eine Ausnehmung gebildet ist und wenn die Schubladenvorrichtung mindestens ein Anschlagelement umfasst, das beim Verschwenken der Schublade um die Schwenkachse in die Ausnehmung eingreifen kann.

Die Ausnehmung ist vorzugsweise, bezogen auf die Auszugsrichtung, dem mindestens einen Schwenkelement vorgelagert am mindestens einen Auflageelement gebildet.

Beispielsweise kann die Schublade unter Schwerkraft oder durch den Benutzer in die Kippstellung verschwenkt werden, wenn in der Auszugstellung die Ausnehmung so weit herausgezogen ist, dass das Anschlagelement in die Ausnehmung eingreifen kann.

Vorteilhafterweise ist die Ausnehmung dem mindestens einen Schwenkelement bezogen auf die Auszugsrichtung unmittelbar vorgelagert.

Vorzugsweise liegt das mindestens eine Anschlagelement in der Kippstellung der Schublade an einem Rand der mindestens einen Ausnehmung an. Dies gibt insbesondere die Möglichkeit, den Schwenkwinkel der Schublade zu begrenzen. Das Anschlagelement und der Rand der Ausnehmung können korrespondierende Anschlagelemente ausbilden.

Vorzugsweise umfasst der Rand zwei im Winkel zueinander ausgerichtete Randabschnitte, wobei das Anschlagelement an zumindest einem Randabschnitt anliegt, wenn die Schublade die Kippstellung einnimmt.

Der Winkel zwischen den Randabschnitten beträgt vorzugsweise ungefähr 90°.

Von Vorteil ist es, wenn das mindestens eine Anschlagelement zwei im Winkel zueinander ausgerichtete Abschnitte umfasst oder ausbildet, wobei jeder Abschnitt an einem der Randabschnitte anliegt. Auf diese Weise kann durch Zusammenwirken eines Randabschnittes mit einem Abschnitt des Anschlagelementes die Kippstellung der Schublade definiert werden. Der weitere Randabschnitt der Ausnehmung kann an dem weiteren Abschnitt des Anschlagelementes anliegen und insbesondere zur Abstützung der Schublade nach unten auf diesem aufliegen. Der Winkel zwischen den Abschnitten des Anschlagelementes ist vorzugsweise gleich oder im Wesentlichen gleich dem Winkel zwischen den Randabschnitten.

Ein Winkel zwischen der Erstreckung eines der Ausnehmung in Auszugsrichtung vorausgehenden Auflagebereiches und dem nachfolgenden Randabschnitt beträgt vorzugsweise ungefähr 30° bis 80°, vorzugsweise ungefähr 40° bis 70°. Bei einer bevorzugten Ausführungsform beträgt der Winkel zum Beispiel 65°.

Von Vorteil ist es, wenn das mindestens eine Anschlagelement in der Kippstellung der Schublade formschlüssig in die Ausnehmung eingreift, wobei beispielsweise die Abschnitte des Anschlagelement an den Randabschnitten des Randes der Ausnehmung anliegen.

Von Vorteil ist es, wenn das mindestens eine Stützelement mindestens ein Anschlagelement für die Schublade in deren Kippstellung umfasst oder ausbildet, insbesondere das vorstehend beschriebene Anschlagelement. Gesonderte Komponenten der Schubladenvorrichtung können dadurch für diese beiden Funktionen eingespart werden. Die konstruktive Ausgestaltung der Schubladenvorrichtung wird vereinfacht. Beispielsweise weicht das mindestens eine Auflageelement im Bereich der Ausnehmung vom mindestens einen Stützelement zurück. Die Schublade kann ausgezogen werden, wobei der Anlagebereich des mindestens einen Aufnahmeelementes so weit relativ zum mindestens einen Stützelement verschoben wurde, dass er nicht mehr am Stützelement anliegt. Das Stützelement kann in die Ausnehmung eingreifen und dadurch die Schublade um die Schwenkachse verschwenkt werden.

Bei einer bevorzugten Ausführungsform der Erfindung kann vorgesehen sein, dass am mindestens einen Stützelement, bezogen auf die Auszugsrichtung vorne, mindestens eine Ausnehmung gebildet ist und dass die Schubladenvorrichtung mit dem mindestens einen Auflageelement beim Verschwenken der Schublade um die Schwenkachse in die Ausnehmung eingreifen kann. Bei der Auszugsbewegung kann das mindestens eine Auflageelement auf dem mindestens einen Stützelement aufliegen, bis es in die Ausnehmung eingreifen kann. Dies kann beispielsweise die Möglichkeit eröffnen, die Schublade von der Auszugsstellung in die Kippstellung zu überführen.

In der Kippstellung liegt die Schublade vorzugsweise an einem Rand der mindestens einen Ausnehmung an. Der Rand kann zum Beispiel als Boden der Ausnehmung angesehen werden, auf dem das mindestens eine Auflageelement aufliegt.

Vorgesehen sein kann, dass die Ausnehmung so bemessen ist, im Wesentlichen das Auflageelement aufzunehmen. Dementsprechend kann ein formschlüssiger Eingriff des Auflageelementes vorgesehen sein, gleichwohl mit hinreichend Spiel, um eine Verschwenkung der Schublade zu ermöglichen.

Bei einer andersartigen Ausführungsform, bei der beispielsweise zwei Auflageelemente der Schublade zum Einsatz kommen können, kann eine Ausnehmung für beide Auflageelemente gemeinsam vorgesehen sein. Eine derartige Ausnehmung kann zum Beispiel in Gestalt einer Abschrägung am mindestens einen Stützelement ausgestaltet sein. Beispielsweise kann sich die Ausnehmung über die gesamte oder im Wesentlichen gesamte Erstreckung der Schublade am mindestens einen Stützelement erstrecken.

Von Vorteil ist es, wenn das mindestens eine Stützelement unterhalb der Schublade abgeordnet ist.

Das mindestens eine Stützelement ist vorzugsweise plattenförmig ausgestaltet.

Günstig kann es insbesondere sein, wenn das mindestens eine Stützelement ein Basisteil des Reinigungswagens ist, an dem Rollen des Reinigungswagens gehalten sind.

Bei dem plattenförmigen Stützelement oder dem Basisteil kann insbesondere der Vorteil bestehen, dass nur ein Stützelement für zwei oder mehr Auflageelemente der Schublade vorgesehen sein kann. Die konstruktive Ausgestaltung der Schubladenvorrichtung wird dadurch vereinfacht.

Günstig kann es sein, wenn das mindestens eine Schwenkelement, bezogen auf die Erstreckung der Schublade entlang der Auszugsrichtung, in dessen Mitte oder im Wesentlichen in dessen Mitte angeordnet ist.

Vorteilhafterweise ist das eine Schwenkelement auf einer Schwerpunktsachse oder im Wesentlichen auf einer Schwerpunktsachse der Schublade angeordnet, unter Annahme einer leeren Schublade.

Das mindestens eine Schwenkelement ist günstigerweise, bezogen auf eine Höhenrichtung der Schublade, unterhalb von dessen Mitte angeordnet.

Vorteilhaft ist es, wenn das mindestens eine Schwenkelement, bezogen auf die Höhenrichtung, an einem unteren Rand der Schublade angeordnet ist, insbesondere an einem unteren Rand eines Schubladenseitenteils.

Ein Winkel beim Verschwenken der Schublade von der Auszugsstellung in die Kippstellung beträgt vorzugsweise ungefähr 10° bis 60°, vorzugsweise ungefähr 20° bis 50°. Bei einer bevorzugten Ausführungsform beträgt der Winkel ca. 25°.

Von Vorteil ist es, wenn die Schublade ein Rahmenteil und ein behälterförmiges und zum Beispiel eimerförmiges Einsetzteil umfasst, das lösbar in das Rahmenteil einsetzbar ist. Das Rahmenteil kann vorteilhafterweise mit dem Reinigungswagen fest verbunden sein. Das Rahmenteil kann über die mindestens eine Führungseinrichtung verschiebbar geführt und relativ zur Führungseinrichtung schwenkbar sein. Das Einsetzteil dient zur Bevorratung von Gegenständen und kann erforderlichenfalls aus dem Rahmenteil entnommen werden.

Vorgesehen sein kann, dass das Einsetzteil einen Deckel aufweist, der wahlweise geöffnet oder geschlossen sein kann.

Das Einsetzteil kann bei einer bevorzugten Ausführungsform eine im Wesentlichen quaderförmige Gestalt aufweisen. Auch das Rahmenteil kann eine im Wesentlichen quaderförmige Gestalt aufweisen.

Das Rahmenteil umfasst bevorzugt Seitenteile und die Seitenteile quer und insbesondere senkrecht zur Auszugsrichtung verbindende Verbindungselemente, wobei das Einsetzteil an den Verbindungselementen einhängbar ist. Dadurch erweist sich die Schubladenvorrichtung als besonders handhabungsfreundlich.

Vorzugsweise umfasst die Schubladenvorrichtung eine weitere Schublade, die an mindestens einer gemeinsamen Führungseinrichtung mit der Schublade gehalten ist, wobei die weitere Schublade in einer Auszugsrichtung von einer eingeschobenen Stellung in eine Auszugsstellung überführbar ist, die der Auszugsrichtung der bislang beschriebenen Schublade entgegengesetzt ist. Dies bietet die Möglichkeit, über die Führungseinrichtung zwei Schubladen zu führen. Vorzugsweise können über die Führungseinrichtung, zum Beispiel den mindestens einen genannten Führungskörper, zwei Schubladen gemeinsam am Reinigungswagen festgelegt werden, beispielsweise an dessen Gehäuse.

Die weitere Schublade ist vorzugsweise relativ zur mindestens einen Führungseinrichtung von der Auszugsstellung in eine Kippstellung schwenkbar.

Günstigerweise sind die vorstehend am Beispiel der Schubladenvorrichtung beschriebenen Merkmale, die sich auf die Schublade beziehen, bei der weiteren Schublade ebenfalls vorhanden. Die beiden Schubladen sind vorzugsweise in konstruktiver Hinsicht identisch ausgestaltet. Auf die obigen Ausführungen wird verwiesen. Beispielsweise ist die weitere Schublade um eine weitere Schwenkachse quer und insbesondere senkrecht zur weiteren Auszugsrichtung verschwenkbar.

Wie eingangs erwähnt, betrifft die vorliegende Erfindung auch einen Reinigungswagen. Ein erfindungsgemäßer, die eingangs genannte Aufgabe lösender Reinigungswagen umfasst eine Trageinrichtung mit daran gehaltenen Rollen zum Verfahren auf einer Aufstellfläche und mindestens eine Schubladenvorrichtung der vorstehend genannten Art.

Die Vorteile, die bereits im Zusammenhang mit der Erläuterung der erfindungsgemäßen Schubladenvorrichtung erwähnt wurden, können bei dem Reinigungswagen ebenfalls erzielt werden. Diesbezüglich kann auf die voranstehenden Ausführungen verwiesen werden.

Vorteilhafte Ausführungsformen des erfindungsgemäßen Reinigungswagens ergeben sich durch vorteilhafte Ausführungsformen der erfindungsgemäßen Schubladenvorrichtung. Auch diesbezüglich kann auf die voranstehenden Ausführungen verwiesen werden.

Die Rollen können Lenkrollen sein oder ungelenkte Rollen sein.

Günstigerweise umfasst die Trageinrichtung ein insbesondere plattenförmiges Basisteil, das ein Stützelement der Schubladenvorrichtung für die Schublade ausbildet. Das Basisteil kann Bestandteil der Trageinrichtung einerseits und Bestandteil der Schubladenvorrichtung andererseits sein. Als Bestandteil der Schubladenvorrichtung bildet es zum Beispiel das Stützelement, auf dem die Schublade aufliegen kann.

Der Reinigungswagen kann vorteilhafterweise ein Gehäuse umfassen oder ausbilden mit im Abstand zueinander angeordneten Seitenwänden, zwischen denen die Schublade angeordnet ist, wobei Führungskörper der Schubladenvorrichtung am Gehäuse festgelegt oder festlegbar sind, oder wobei die Seitenwände Führungskörper der Schubladenvorrichtung ausbilden.

Insbesondere bei der zuerst genannten Ausführungsform kann die Schubladenvorrichtung beispielsweise eine vormontierte Baueinheit sein oder bilden, die an dem Gehäuse des Reinigungswagens festlegbar ist. Beispielsweise können Führungskörper mit Profilteilen des Gehäuses verbunden werden.

Bei der zweiten genannte Ausführungsform können gesonderte Führungskörper eingespart werden, um der Schubladenvorrichtung und dem Reinigungswagen eine konstruktiv einfache Ausgestaltung zu verleihen.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine bevorzugte Ausführungsform eines erfindungsgemäßen Reinigungswagens, umfassend bevorzugte Ausführungsformen einer erfindungsgemäßen Schubladenvorrichtung, wobei eine in Figur 1 dargestellte Schublade eine eingeschobene Stellung einnimmt;
- Figur 2:: eine vergrößerte Darstellung des Reinigungswagens in Figur 1, wobei die Schublade eine Kippstellung einnimmt;
- Figur 3:: den Reinigungswagen aus Figur 1 mit ausgeblendeter Seitenwand und Blick auf zwei Schubladen, jeweils in einer eingeschobenen Stellung;
- Figur 4:: ein Rahmenteil einer Schublade der erfindungsgemäßen Schubladenvorrichtung in einer Kippstellung relativ zu einem Basisteil des Reinigungswagens aus Figur 1;
- Figur 5:: eine schematische Seitenansicht eines Rahmenteils der erfindungsgemäßen Schubladenvorrichtung und eines Rahmenteils des Reinigungswagens, wobei das Rahmenteil der Schublade eine eingeschobene Stellung einnimmt;
- Figur 6:: eine Darstellung entsprechend Figur 5 nach dem Überführen des Rahmenteils in eine Auszugsstellung;
- Figur 7:: eine Darstellung entsprechend Figur 6 nach dem Verschwenken des Rahmenteils in eine Kippstellung entsprechend einer Kippstellung der Schublade;
- Figur 8:: eine perspektivische Darstellung eines Rahmenteils und eines Einsetzteils einer Schublade der erfindungsgemäßen Schubladenvorrichtung;
- Figur 9:: eine perspektivische Teildarstellung der Schubladenvorrichtung, wobei nur eines der Rahmenteile dargestellt ist und das entsprechende Einsetzteil ausgeblendet ist;
- Figur 10:: eine Explosionsdarstellung der Schubladenvorrichtung gemäß Figur 9;
- Figur 11:: eine Schnittansicht eines Profilteils des Reinigungswagens, wobei am Profilteil ein Führungskörper der Schubladenvorrichtung gehalten ist; und
- Figuren 12 bis 14:: eine Darstellung entsprechend den Figuren 5 bis 7 bei einer weiteren bevorzugten Ausführungsform der Erfindung.

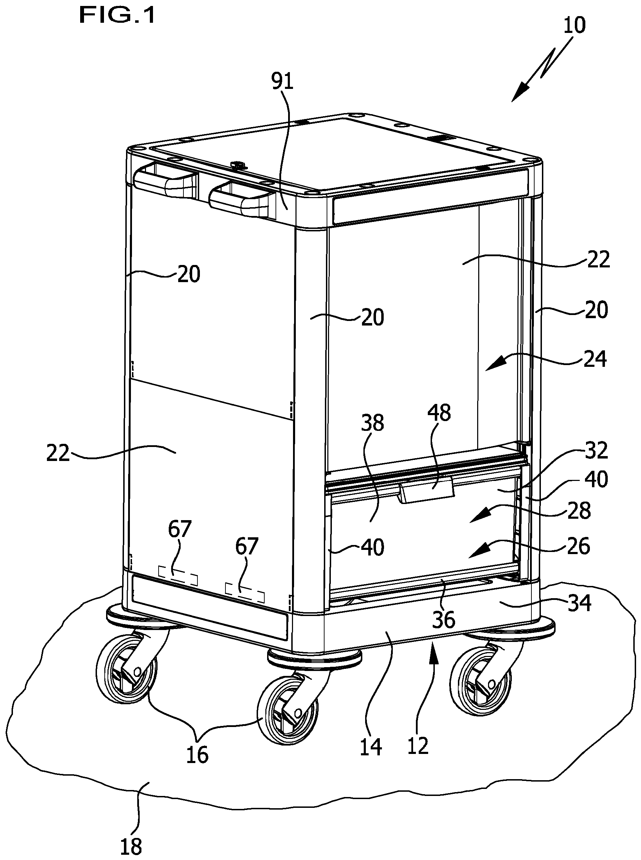

Figur 1 zeigt in einer perspektivischen Darstellung eine insgesamt mit dem Bezugszeichen 10 belegte vorteilhafte Ausführungsform eines erfindungsgemäßen Reinigungswagens. Der Reinigungswagen 10 dient zur Aufnahme von insbesondere handgeführten Reinigungswerkzeugen und Reinigungsutensilien für die manuelle Reinigung für einen in der Zeichnung nicht dargestellten Benutzer.

Der Reinigungswagen 10 umfasst eine Trageinrichtung 12, die untenseitig ein im Wesentlichen plattenförmiges Basisteil 14 umfasst. Am Basisteil 14 sind Rollen 16 gehalten, über die der Reinigungswagen 10 auf einer Aufstellfläche 18 vom Benutzer handgeführt verfahren werden kann. Die Rollen 16 sind vorliegend Lenkrollen.

Die Trageinrichtung 12 umfasst vom Basisteil 14 nach oben abstehend Profilteile 20 an Eckbereichen des Reinigungswagens 10. Die Profilteile 20 sind miteinander über Seitenwände 22 verbunden und bilden gemeinsam mit diesen ein Gehäuse 24 des Reinigungswagens 10. Das Gehäuse 24 kann insbesondere als Korpus des Reinigungswagens 10 angesehen werden. Die Profilteile 20 können insbesondere als Holme bezeichnet werden.

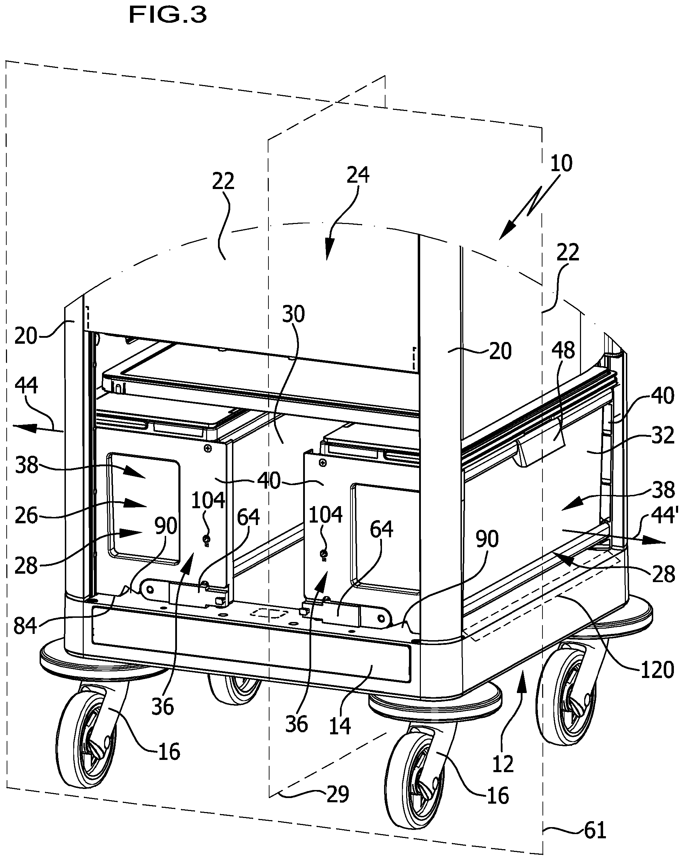

Der Reinigungswagen 10 umfasst eine mit dem Bezugszeichen 26 gekennzeichnete bevorzugte Ausführungsform der erfindungsgemäßen Schubladenvorrichtung, die im vorliegenden Fall zwei Schubladen 28 umfasst. Die Schubladen 28 sind identisch ausgestaltet. Dabei sind die Schubladen 28 symmetrisch zueinander bezüglich einer Mittelebene 29 des Reinigungswagens 10 angeordnet und ausgebildet (Figur 3). Nachfolgend wird im Wesentlichen nur auf eine Schublade 28 eingegangen. Die diesbezüglichen Erläuterungen gelten entsprechend für die andere Schublade 28.

Es versteht sich, dass die erfindungsgemäße Schubladenvorrichtung nur eine Schublade umfasst. Bei der vorliegend beschriebenen vorteilhaften Ausführungsform der Erfindung umfasst die Schubladenvorrichtung 26 zwei Schubladen 28.

Wie insbesondere aus den Figuren 1, 3 und 8 ersichtlich ist, ist die Schublade 28 der Schubladenvorrichtung 26 in einer eingeschobenen Stellung in einem Aufnahmeraum 30 oberhalb des Basisteils 14 angeordnet. Dabei ist die Schublade 28 so weit in den Aufnahmeraum 30 hineingeschoben, dass eine Vorderseite 32 der Schublade 28 im Wesentlichen mit einem vorderen Rand 34 des Basisteils 14 und mit dem Gehäuse 24 fluchtet.

Die Schublade 28 umfasst im vorliegenden Fall ein Rahmenteil 36 und ein in dieses lösbar einsetzbares Einsetzteil 38.

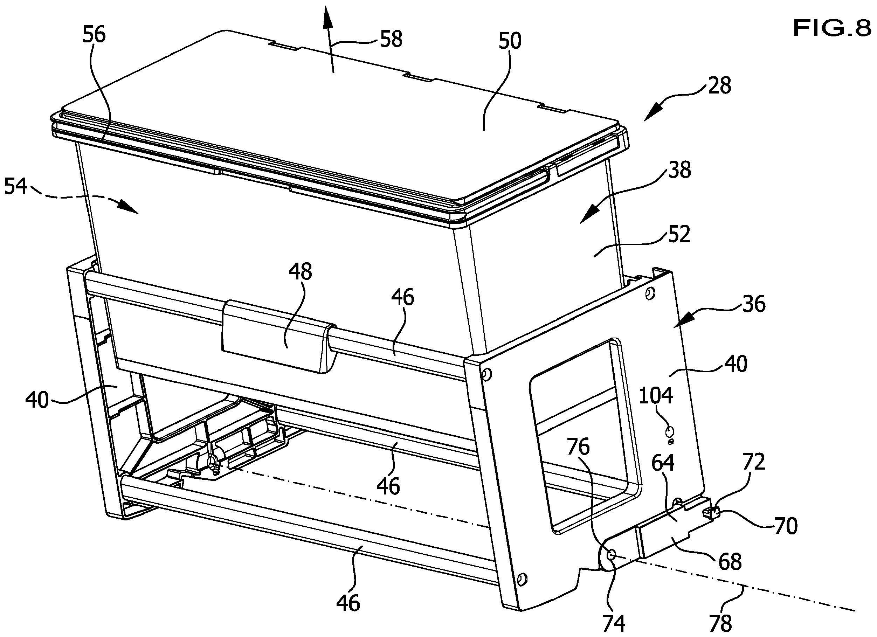

Wie insbesondere aus Figur 8 hervorgeht, umfasst das Rahmenteil 36 im Abstand zueinander angeordnete Seitenteile 40, die im Wesentlichen plattenförmig gebildet sind. Die Seitenteile 40 sind in einer Querrichtung 42, die quer und insbesondere senkrecht zur Auszugsrichtung 44 der Schublade 28 ausgerichtet ist, voneinander beabstandet.

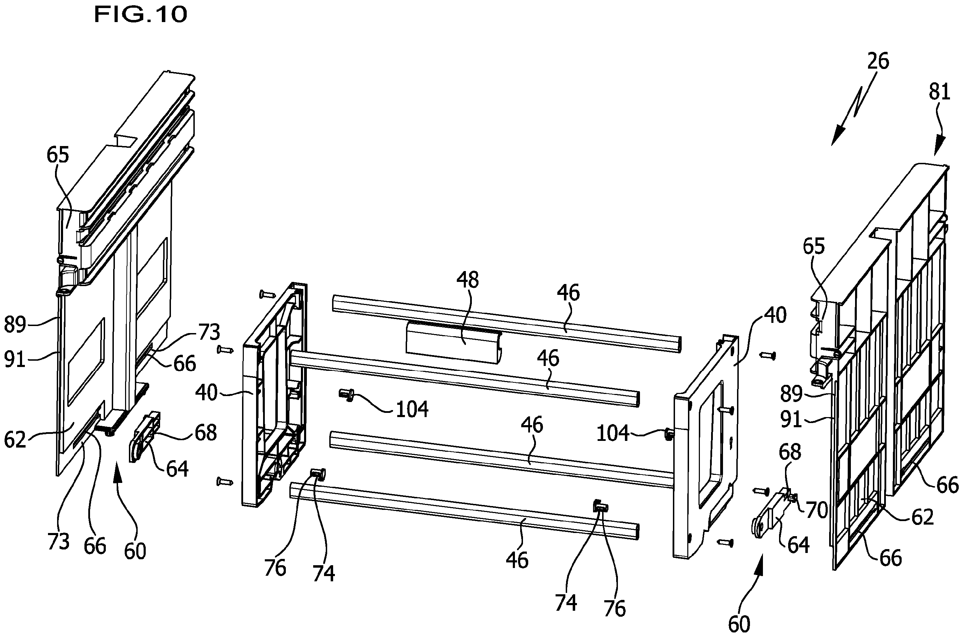

Die Seitenteile 40 sind miteinander über Verbindungselemente 46 in Gestalt von Profilen verbunden, beispielsweise über separate Fixierelemente (Figur 10). Die Verbindungselemente 46 sind an Eckbereichen der Seitenteile 40 angeordnet, so dass das Rahmenteil 36 eine insgesamt im Wesentlichen quaderförmige Gestalt aufweist. An einem Verbindungselement 46 ist ein Griffelement 48 zum Ergreifen der Schublade 28 durch den Benutzer vorgesehen.

Das Einsetzteil 38 ist behälterförmig und speziell eimerförmig und vorliegend korrespondierend zum Rahmenteil 36 von im Wesentlichen quaderförmiger Gestalt. Das Einsetzteil 38 weist einen aufklappbaren Deckel 50 zum Verschließen eines von einer Wandung 52 eingefassten Aufnahmeraumes 54 für zu bevorratende Gegenstände auf. Ferner umfasst das Einsetzteil 38 einen ausschwenkbaren Traggriff 56, der platzsparend an den Deckel 50 angelegt werden kann.

Das Einsetzteil 38 kann an den beiden oberen Verbindungselementen 46 des Rahmenteils 36 eingehängt und dadurch an diesem gehalten werden. Das Einsetzteil 38 steht vorzugsweise darüber hinaus auf den beiden unteren Verbindungselementen 46 auf. Zu diesem Zweck ist untenseitig am Einsetzteil 38 eine entsprechende Stufe gebildet.

Zum Entnehmen des Einsetzteils 38 kann dieses in einer vom Rahmenteil 36 weg weisenden Richtung, gekennzeichnet durch einen Pfeil 58 in Figur 8, angehoben werden.

Zur Führung der Bewegung der Schublade 28 beim Ausziehen und beim Einschieben umfasst die Schubladenvorrichtung 26 im vorliegenden Beispiel zwei Führungseinrichtungen 60. Die Führungseinrichtungen 60 sind spiegelsymmetrisch zueinander gebildet bezüglich einer weiteren Mittelebene 61, weswegen nachfolgend nur auf eine der Führungseinrichtungen 60 eingegangen wird. Die diesbezüglichen Aussagen gelten für die andere Führungseinrichtung 60 entsprechend.

Die Führungseinrichtungen 60 sind in der Querrichtung 42 seitlich neben den Seitenteilen 40 angeordnet, so dass die Schublade 28 zwischen den Führungseinrichtungen 60 positioniert ist. Über die Führungseinrichtungen 60 ist die Schubladenvorrichtung wie nachfolgend erläutert am Gehäuse 24 festgelegt, insbesondere an den Profilteilen 20.

Die Führungseinrichtungen 60 dienen zum Führen beider Schubladen 28. Während die eine Schublade 28 in der Auszugsrichtung 44 ausziehbar ist und in der Gegenrichtung in den Aufnahmeraum 30 einschiebbar ist, ist die andere Schublade 28 in dieser Gegenrichtung, entsprechend einer weiteren Auszugsrichtung 44', aus dem Aufnahmeraum 30 ausziehbar und in entgegengesetzter Richtung (entsprechend der Auszugsrichtung 44 der ersten Schublade 28) in den Aufnahmeraum 30 einschiebbar.

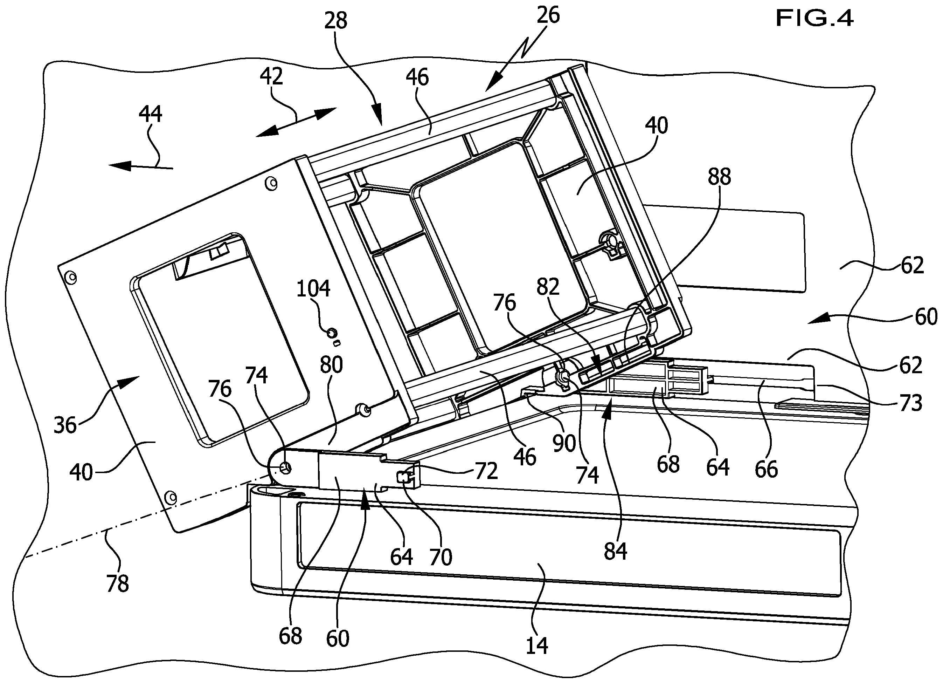

Wie insbesondere aus den Figuren 4, 8, 9 und 10 hervorgeht, umfasst die Führungseinrichtung 60 einen Führungskörper 62 und ein Führungselement 64.

Der Führungskörper 62 ist vorliegend im Wesentlichen plattenförmig ausgestaltet und seitlich neben dem jeweiligen Seitenteil 40 positioniert.

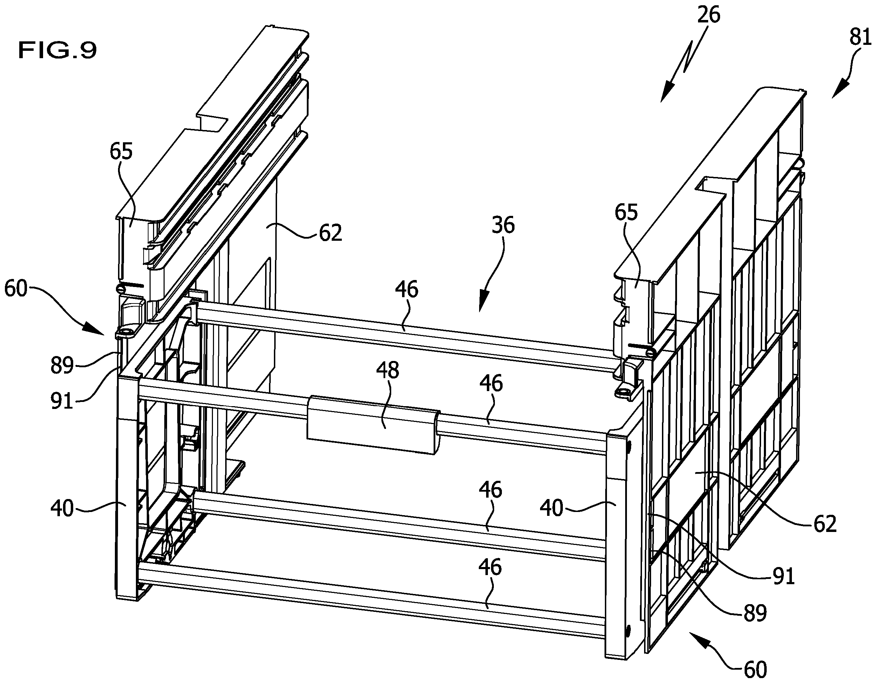

Vorgesehen sein kann, dass der Führungskörper 62 die Schublade 28 in einer Höhenrichtung überragt. Beispielsweise steht der Führungskörper 62, wie in den Figuren 9 und 10 erkennbar, in der Höhenrichtung über die Schubladen 28 hinaus und umfasst ein Halteteil 65. Am Halteteil 65 können beispielsweise weitere Schubladen und/oder Zwischenböden im Aufnahmeraum 30 angeordnet werden.

Im Führungskörper 62 ist eine Führung für das Führungselement 64 in Gestalt eines Führungsschlitzes 66 gebildet. Es versteht sich, dass für das Führungselement 64, das der jeweils anderen Schublade 28 zugeordnet ist, ein korrespondierender Führungsschlitz 66 im Führungskörper 62 gebildet ist.

Bei einer andersartigen bevorzugten Ausführungsform der Erfindung wird der Führungskörper beispielsweise durch eine Seitenwand 22 des Gehäuses 24 gebildet. Die Seitenwand 22 kann zu diesem Zweck beispielsweise an ihrer der Schublade 28 zugewandten Seite eine Führung in Gestalt des Führungsschlitzes 66 aufweisen. Die Seitenwand 22 kann durchbrochen sein, um den Führungsschlitz 66 zu bilden. Figur 1 zeigt beispielhaft durch eine strichlinierte Kontur 67 einen entsprechenden Führungsschlitz bei einer Ausführungsform, bei der die Seitenwand 22 den Führungsschlitz 66 umfasst.

Das Führungselement 64 ist vorliegend ausgestaltet als Schieber 68, der zwischen dem Führungskörper und dem Seitenteil 40 angeordnet ist. Der Schieber 68 umfasst einen Vorsprung 70, der in den Führungsschlitz 66 eingreift. Der Vorsprung 70 bildet ein Anschlagelement 72, das bei eingeschobener Schublade 28 am Rand 73 des Führungsschlitzes 66 anschlagen kann. In der eingeschobenen Stellung schlägt das Anschlagelement 72 an dem Rand 73 endseitig am Führungsschlitz 66 an.

Darüber hinaus kann das Anschlagelement 72 bevorzugt am Rand 73 am gegenüberliegenden Ende des Führungsschlitzes 66 anschlagen. Dadurch wird der Auszugweg der Schublade 28 in der Auszugsrichtung 44 begrenzt. Dies ist, wie nachfolgend erläutert wird, bei gekippter Schublade 28 der Fall.

Der Schieber 68 ist im Führungsschlitz 66 beim Verschieben der Schublade 28 geführt, so dass insbesondere durch beidseitige Führung eine zuverlässige Funktion gesichert und insbesondere ein Verkanten vermieden werden kann.

Der Schieber 68 ist mit der Schublade 28, insbesondere dem Rahmenteil 36, und speziell dem Seitenteil 40, verbunden. Zur Verbindung dient ein Kopplungselement 74 in Gestalt eines Stiftes oder Zapfens am Seitenteil 40, der mit dem Schieber 68 in Eingriff steht. Vorliegend greift das Kopplungselement 74 an der dem Vorsprung 70 abgewandten Seite des Schiebers 68 (bezogen auf dessen Längserstreckung) am Seitenteil 40 an.

Das Kopplungselement 74 ist vorliegend ein Schwenkelement 76. Beide Schwenkelemente 76 der Schublade 28 definieren eine Schwenkachse 78, um die die Schublade 28, über das Rahmenteil 36, relativ zu den Schiebern 68 verschwenkt werden kann. Die Schwenkachse 78 ist quer und insbesondere senkrecht zur Auszugsrichtung 44 ausgerichtet.

Das Schwenkelement 76 ist bezogen auf die Auszugsrichtung 44 im Wesentlichen in der Mitte der Schublade 28 angeordnet. Vorteilhaft ist es, wenn das Schwenkelement 76 auf einer Schwerpunktsachse oder im Wesentlichen auf einer Schwerpunktsachse der Schublade 28 liegt. Weiter ist das Schwenkelement 76 an einem unteren Rand 80 oder im Bereich des unteren Randes 80 der Schublade 28 am Seitenteil 40 angeordnet.

Wie insbesondere aus den Figuren 9 und 10 ersichtlich ist, kann die Schubladenvorrichtung 26 eine Baueinheit 81 bilden. Die Baueinheit 81 kann insbesondere vormontiert sein, wenn der Reinigungswagen 10 montiert wird.

Die Baueinheit 81 umfasst beispielsweise die Führungskörper 62, die Führungselemente 64 und die Rahmenteile 36 beider Schubladen 28 sowie die Kopplungselemente 74. Die Einsetzteile 38 können Bestand der Baueinheit 81 sein oder zunächst entfallen.

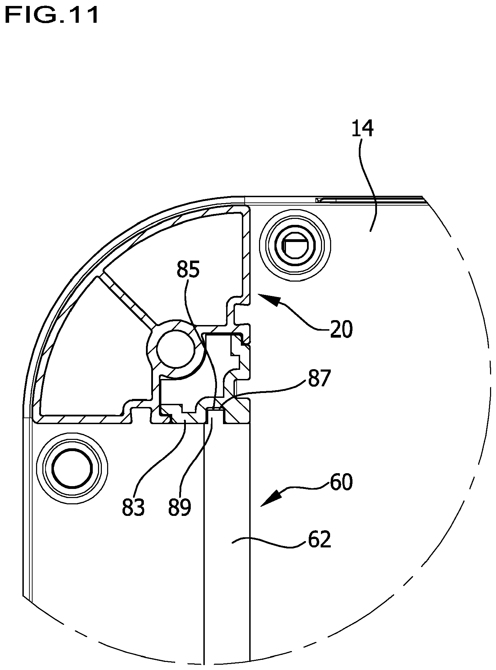

Unabhängig davon, ob die Schubladenvorrichtung 26 als Baueinheit 81 bereitgestellt wird oder nicht, können die Führungskörper 62 auf konstruktiv einfache Weise am Gehäuse 24 festgelegt werden. Diesbezüglich wird auf Figur 11 verwiesen.

Figur 11 zeigt eine Draufsicht entgegen der Höhenrichtung auf das Basisteil 14, wobei ein Profilteil 20 in einer Schnittdarstellung gezeigt ist. Das Profilteil 20 ist am Basisteil 14 gehalten und nimmt seinerseits ein Aufnahmeteil 83 auf, das sich längs des Profilteils 20 erstreckt. Das Profilteil 20 könnte einstückig mit dem Aufnahmeteil 83 gebildet sein.

Am Aufnahmeteil 83 ist eine Aufnahme 85 gebildet. Die Aufnahme 85 ist vorliegend als Nut 87 ausgestaltet.

Der Führungskörper 62 weist einen korrespondierend zur Aufnahme 85 ausgebildeten Vorsprung 89 auf, ausgestaltet als Leiste 91. Die Leiste 91 kann formschlüssig in die Nut 87 eingreifen, wodurch der Führungskörper 62 am Profilteil 20 festgelegt ist. Vorliegend sind Leisten 91 an beiden Seiten des Führungskörpers 62 angeordnet, so dass dieser an zwei im Abstand zueinander angeordneten Profilteilen 20 festgelegt werden kann.

Bei der Montage kann beispielsweise der Führungskörper 62 für sich allein oder als Bestandteil der vormontierten Baueinheit 81 von oben in die Nuten 87 eingeschoben werden. Bei der Montage ist zu diesem Zweck ein oberes Teil 93 des Gehäuses 24, das dessen Deckenwand umfasst, noch nicht an den Profilteilen 20 angebracht.

Die Schublade 28 kann über die Seitenteile 40 auf dem Basisteil 14 aufliegen. Zu diesem Zweck bildet das jeweilige Seitenteil 40 ein Auflageelement 82. Das Basisteil 14 bildet ein korrespondierendes Stützelement 84, das die Schublade 28 von unten stützen kann.

Wie insbesondere aus den Figuren 4 bis 7 hervorgeht, wird das Auflageelement 82 durch die Unterseite des Seitenteils 40 gebildet.

Das Auflageelement 82 umfasst einen Auflagebereich 86 und einen Auflagebereich 88 zum Aufliegen auf dem Basisteil 14. Der Auflagebereich 86 ist dem Schwenkelement 76 bezogen auf die Auszugsrichtung 44 vorgelagert positioniert. Der Auflagebereich 88 ist bezogen auf die Auszugsrichtung 44 dem Schwenkelement 76 nachgelagert positioniert.

Dem Auflagebereich 86 nachgelagert und dem Schwenkelement 76 vorgelagert ist am Auflageelement 82 eine Ausnehmung 90 gebildet. Im Bereich der Ausnehmung 90 weicht das Auflageelement 82 von dem Basisteil 14 zurück.

Die Ausnehmung 90 ist in Seitenansicht dreieckförmig und durch einen Rand 92 begrenzt. Der Rand 92 umfasst einen Randabschnitt 94 und einen Randabschnitt 96. Der Randabschnitt 94 schließt sich an den Auflagebereich 86 an. An den Randabschnitt 96 schließt sich der Auflagebereich 88 an.

Vorliegend beträgt der Winkel zwischen den Randabschnitten 94, 96 ungefähr 90°.

Der Randabschnitt 94 weist einen Winkel bezüglich dem Anlagebereich 86 in Erstreckungsrichtung längs der Auszugsrichtung 44 auf, der vorliegend ungefähr 65° beträgt. Beim Verschwenken kann die Schublade 28 aus diesem Grund relativ zum Basisteil 14 im vorliegenden Beispiel um einen Winkel von ungefähr 25° verschwenkt werden.

Auf die Funktion der Schublade 28 wird nachfolgend insbesondere unter Verweis auf die Figuren 4 bis 7 eingegangen.

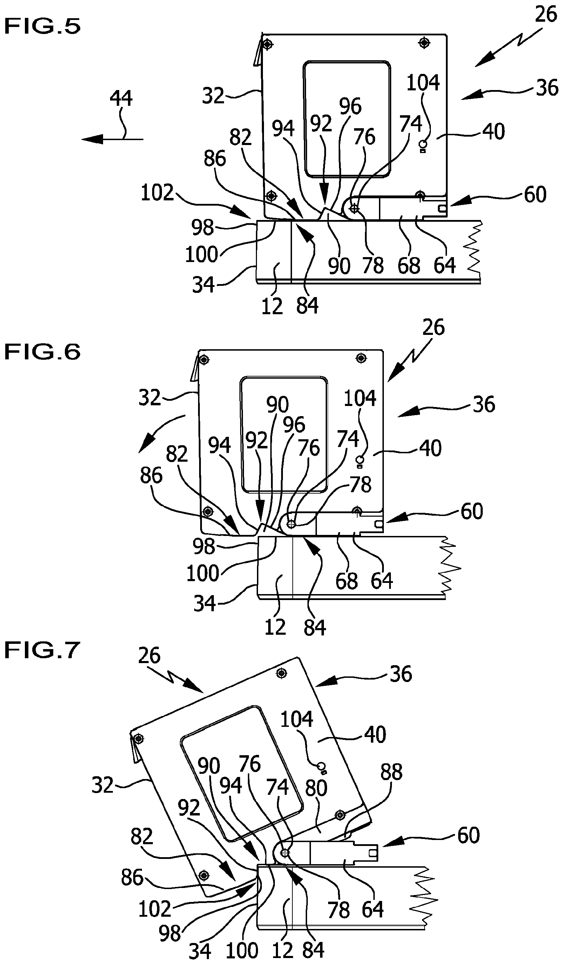

In einer eingeschobenen Stellung der Schublade 28 ist der Schieber 68 wie erwähnt mit dem hinteren Anschlagelement 72 bis zum Ende des Führungsschlitzes 66 geschoben. Die Vorderseite 32 fluchtet ungefähr mit dem vorderen Rand 34 des Basisteils 14. Die Schublade 28 liegt über die Auflagebereiche 86, 88 auf dem vom Basisteil 14 gebildeten Stützelement 84 auf (Figur 5). Durch Ziehen beispielsweise am Griffelement 48 wird die Schublade 32 in der Auszugsrichtung 44 relativ zum Basisteil 14 verschoben. Die Führungseinrichtung 60 führt die Bewegung der Schublade 28.

Anfangs liegen noch beide Auflagebereiche 86 auf dem Basisteil 14 auf. Die Schublade 28 kann bis in eine Auszugsstellung verschoben werden, bei der die Ausnehmung 90 so weit ausgezogen worden ist, dass sie dem vorderen Rand 34 des Basisteils 14 benachbart ist (Figur 6). Die Schublade 32 kann insbesondere ohne Zutun des Benutzers um die Schwenkachse 78 verschwenken, wenn der Kontakt des Anlagebereiches 86 mit dem Basisteil 14 entfällt.

Die Verschwenkung der Schublade 28 kann beispielsweise unter Schwerkraft erfolgen.

Alternativ kann der Benutzer die Schublade 28 um die Schwenkachse 78 verschwenken und in eine Kippstellung überführen (Figur 7). Beim Verschwenken greift das Basisteil 14 in die Ausnehmung 90 ein. In der Kippstellung liegt das Basisteil 14 an den Randabschnitten 94, 96 an.

Zu diesem Zweck weist das Basisteil 14 einen Abschnitt 98 am vorderen Rand 34 auf. Obenseitig weist das Basisteil 14 einen Abschnitt 100 auf.

In der Kippstellung der Schublade 28 greift das Basisteil 14 formschlüssig in die Ausnehmung 90 ein. Der Abschnitt 98 liegt am Randabschnitt 94 an, und der Abschnitt 100 liegt am Randabschnitt 96 an. Das Basisteil 14 bildet über die Abschnitte 98, 100 ein Anschlagelement 102. Dadurch ist die Kippstellung der Schublade 28 relativ zum Basisteil 14 eindeutig definiert, und die Schwenkbewegung der Schublade 28 wird begrenzt (Figur 7).

In der Kippstellung der Schublade 28 schlägt der Vorsprung 70 vorne an dem Rand 73 des Führungsschlitzes 66 an. Dadurch kann eine auf die Schublade 28 wirkende Kraft an die Führungskörper 62 und über diese an das Gehäuse 24 abgeleitet werden.

Die Schublade 28 umfasst an einem jeweiligen Seitenteil 40 ein Anschlagelement 104. Das Anschlagelement 104 ist vorgesehen, um die Schwenkbewegung der Schublade 28 zu begrenzen und dadurch die Schwenkstellung klar zu definieren.

Das Anschlagelement 104 ist ausgestaltet als Vorsprung, beispielsweise zapfenförmig, am Seitenteil 40 (Figuren 3, 4 und 8).

Ein korrespondierendes Anschlagelement wird vorliegend durch das Gehäuse 24 gebildet, beispielsweise durch ein jeweiliges Profiteil 20.

Wenn die Schublade 28 in die Kippstellung überführt wird, kann das Anschlagelement 104 am Profilteil 20 anschlagen. Dies erfolgt dann, wenn das Anschlagelement 102 wie oben unter Verweis auf Figur 7 erläutert vollständig in die Ausnehmung 90 eingreift.

Das Anschlagelement 104 kann Bestandteil der Baueinheit 81 sein.

Zum Einschieben kann die Schublade 28 zunächst aus der Kippstellung um die Schwenkachse 78 verschwenkt werden, bis der Auflagebereich 88 auf dem Basisteil 14 anliegt. Dadurch ist gesichert, dass die Schublade 28 die für das Einschieben korrekte Positionierung aufweist. Durch Einschieben entgegen der Auszugsrichtung 44 kann die Schublade 28 auf dem Basisteil 14 verschoben werden, bis der Vorsprung 70 am Rand des Führungsschlitzes 66 anschlägt.

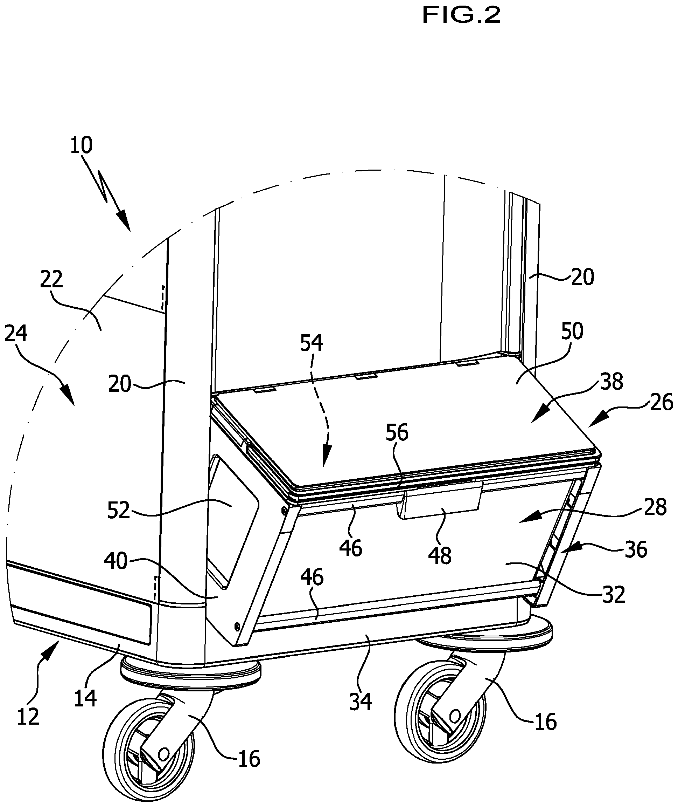

Die erfindungsgemäße Schubladenvorrichtung 26 und der erfindungsgemäße Reinigungswagen 10 zeichnen sich durch eine einfache Handhabbarkeit aus. Durch die Möglichkeit, die Schublade 28 auszuziehen und zu verkippen, kann zuverlässig auf das Einsetzteil 38 zugegriffen werden, das dem Benutzer entgegen nach außen geschwenkt ist (Figur 2). Dabei ragt die Schublade 28 nur in verhältnismäßig geringem Umfang über die Außenkontur des Gehäuses 24 hervor. Eine Gefahr unbeabsichtigten Anstoßens ist dadurch relativ gering. Darüber hinaus weist der Reinigungswagen 10 eine hohe Manövrierfähigkeit auf.

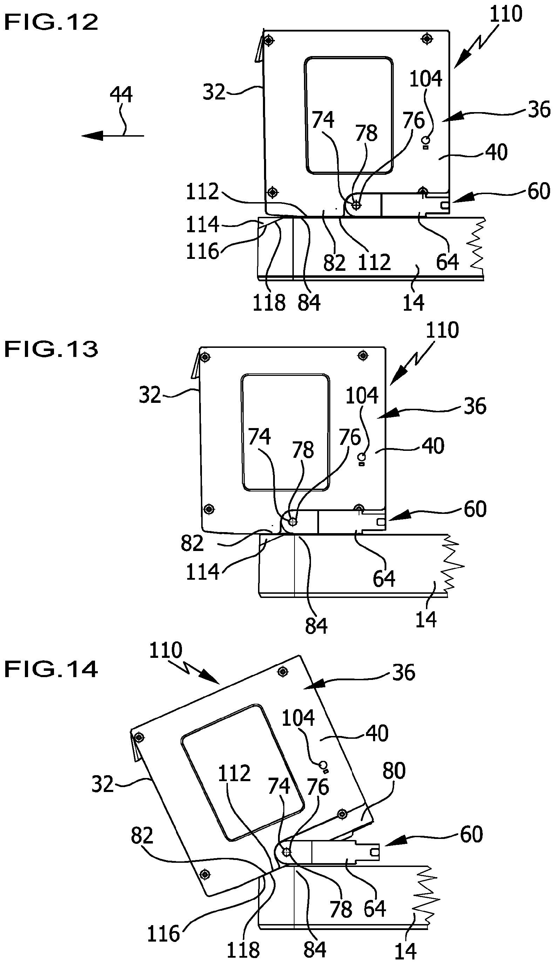

Nachfolgend wird unter Verweis auf Figuren 12 bis 14 auf eine weitere bevorzugte Ausführungsform der erfindungsgemäßen Schubladenvorrichtung eingegangen, die mit dem Bezugszeichen 110 belegt ist.

Die Schubladenvorrichtung 110 ist in den Figuren 12 bis 14 nur teilweise zusammen mit dem Basisteil 14 in einer den Figuren 5 bis 7 entsprechenden Weise dargestellt. Das Einsetzteil 38 ist ebenso ausgeblendet wie die Führungskörper 62. Diese Bauteile können identisch ausgestaltet sein wie bei der Schubladenvorrichtung 26. Die Schubladenvorrichtung 110 kann anstelle oder in Kombination mit der Schubladenvorrichtung 26 beim Reinigungswagen 10 eingesetzt werden. Die vorstehenden Ausführungen in Bezug auf die Schubladenvorrichtung 26 gelten für die Schubladenvorrichtung 110 entsprechend. Es wird lediglich auf die wesentlichen Unterschiede verwiesen.

Bei den Seitenteilen 40 der Schubladenvorrichtung 110 entfällt am Rand 80 die Ausnehmung 90. Das Auflageelement 82 ist längs der Auszugsrichtung 44 durchgehend, wobei ein Auflagebereich 112 vorgesehen ist.

Am Stützelement 84, das vorliegend ebenfalls durch das Basisteil 14 gebildet ist, ist für das Auflageelement 82 jedes Seitenteils 40 eine Ausnehmung 114 gebildet. Die Ausnehmung 114 ist in Seitenansicht dreieckförmig, wobei ein Boden 116 der Ausnehmung 114 einen Rand 118 bildet. Die Schublade 28 kann in die Auszugsstellung gemäß Figur 13 verschoben werden. Anschließend kann die Schublade 28 um die Schwenkachse 78 in die Kippstellung überführt werden. Das Auflageelement 82 greift in die Ausnehmung 114 ein und liegt auf dem Rand 118 auf, wenn die Schublade 28 die Kippstellung gemäß Figur 14 einnimmt.

Im vorliegenden Beispiel ist die Ausnehmung 114 korrespondierend zur Ausnehmung 90 ausgestaltet. Die Auszugsstellung, der Schwenkwinkel und die Kippstellung bei den Ausführungsformen 26 und 110 stimmen insofern überein.

Anstelle von zwei Ausnehmungen 114, die den Auflageelementen 82 beider Seitenteile 40 zugeordnet sind, könnte alternativ vorgesehen sein, dass das Stützelement 84 nur eine einzige Ausnehmung umfasst. Beispielsweise könnte eine derartige Ausnehmung durch eine Abschrägung oder Abfasung am Basisteil 14 gebildet sein. Figur 3 stellt dies rechts durch eine gestrichelte Linie 120 schematisch dar.

### Bezugszeichenliste

- 10: Reinigungswagen
- 12: Trageinrichtung
- 14: Basisteil
- 16: Rolle
- 18: Aufstellfläche
- 20: Profilteil
- 22: Seitenwand
- 24: Gehäuse
- 26: Schubladenvorrichtung
- 28: Schublade
- 29: Mittelebene
- 30: Aufnahmeraum
- 32: Vorderseite
- 34: vorderer Rand
- 36: Rahmenteil
- 38: Einsetzteil
- 40: Seitenteil
- 42: Querrichtung
- 44: Auszugsrichtung
- 46: Verbindungselement
- 48: Griffelement
- 50: Deckel
- 52: Wandung
- 54: Aufnahmeraum
- 56: Traggriff
- 58: Pfeil
- 60: Führungseinrichtung
- 61: Mittelebene
- 62: Führungskörper
- 64: Führungselement
- 65: Halteteil
- 66: Führungsschlitz
- 67: Kontur
- 68: Schieber
- 70: Vorsprung
- 72: Anschlagelement
- 73: Rand
- 74: Kopplungselement
- 76: Schwenkelement
- 78: Schwenkachse
- 80: Rand
- 81: Baueinheit
- 82: Auflageelement
- 83: Aufnahmeteil
- 84: Stützelement
- 85: Aufnahme
- 86, 88: Auflagebereich
- 87: Nut
- 89: Vorsprung
- 90: Ausnehmung
- 91: Leiste
- 92: Rand
- 93: oberes Teil
- 94, 96: Randabschnitt
- 98, 100: Abschnitt
- 102: Anschlagelement
- 104: Anschlagelement
- 110: Schubladenvorrichtung
- 112: Auflagebereich
- 114: Ausnehmung
- 116: Boden
- 118: Rand
- 120: gestrichelte Linie

## Patentansprüche

1. Schubladenvorrichtung für einen Reinigungswagen (10), umfassend eine Schublade (28) mit einem Aufnahmeraum (54), mindestens eine Führungseinrichtung (60), über die die Schublade (28) am Reinigungswagen (10) von einer eingeschobenen Stellung entlang einer Auszugsrichtung (44) in eine Auszugsstellung verschiebbar ist, und mindestens ein Kopplungselement (74) zum Koppeln der Schublade (28) mit der Führungseinrichtung (60),
**dadurch gekennzeichnet, dass**
das mindestens eine Kopplungselement (74) ein Schwenkelement (76) ist, zur schwenkbaren Lagerung der Schublade (28) an der mindestens einen Führungseinrichtung (60), wobei die Schublade (28) in der Auszugsstellung relativ zur mindestens einen Führungseinrichtung (60) um eine quer und insbesondere senkrecht zur Auszugsrichtung (44) ausgerichtete Schwenkachse (78) in eine Kippstellung schwenkbar ist.

2. Schubladenvorrichtung nach Anspruch 1, **dadurch gekennzeichnet, dass** eines der Folgenden gilt:
- die mindestens eine Führungseinrichtung (60) umfasst mindestens ein Führungselement (64), mit dem das mindestens eine Schwenkelement (76) schwenkbar verbunden ist, und mindestens einen Führungskörper (62), an dem das mindestens eine Führungselement (64) entlang der Auszugsrichtung (44) verschiebbar gelagert ist;
- die mindestens eine Führungseinrichtung (60) umfasst mindestens einen Führungskörper (62), an dem das mindestens eine Schwenkelement (76) entlang der Auszugsrichtung (44) verschiebbar gelagert ist;
wobei vorzugsweise der mindestens eine Führungskörper (62) plattenförmig oder im Wesentlichen plattenförmig ausgestaltet ist.

3. Schubladenvorrichtung nach Anspruch 2, **dadurch gekennzeichnet, dass** der mindestens eine Führungskörper (62) an einem Gehäuse (24) des Reinigungswagens (10) festgelegt oder festlegbar ist oder dass der mindestens eine Führungskörper (62) durch eine Gehäusewand, insbesondere eine Seitenwand (22), des Reinigungswagens (10) gebildet ist.

4. Schubladenvorrichtung nach einem der voranstehenden Ansprüche, **dadurch gekennzeichnet, dass** zumindest eines der Folgenden gilt:
- am mindestens einen Führungskörper (62) ist ein Anschlagelement für das mindestens eine Führungselement (64) oder das mindestens eine Schwenkelement (76) gebildet, an dem das Führungselement (64) oder das Schwenkelement (76) in der Auszugsstellung und/oder in der Kippstellung der Schublade (28) anliegt;
- an der Schublade (28) und an der Führungseinrichtung (60) und/oder am Reinigungswagen (10) sind korrespondierende Anschlagelemente (104) angeordnet, zum Begrenzen des Schwenkwinkels der Schublade (28) beim Verschwenken von der Auszugsstellung in die Kippstellung.

5. Schubladenvorrichtung nach einem der voranstehenden Ansprüche, **dadurch gekennzeichnet, dass** das mindestens eine Schwenkelement (76) an einem Seitenteil (40) der Schublade (28) angeordnet ist, bezogen auf eine Richtung quer und insbesondere senkrecht zur Auszugsrichtung (44), und/oder dass die Schubladenvorrichtung (26; 110) zwei Führungseinrichtungen (60) umfasst, zwischen denen die Schublade (28) angeordnet ist, und ein jeweiliges Schwenkelement (76) zum Koppeln mit einer der Führungseinrichtungen (60).

6. Schubladenvorrichtung nach einem der voranstehenden Ansprüche, **dadurch gekennzeichnet, dass** die Schubladenvorrichtung (26; 110) mindestens ein Stützelement (84) umfasst, an dem die Schublade (28) beim Verschieben über mindestens ein Auflageelement (82) aufliegt.

7. Schubladenvorrichtung nach Anspruch 6, **dadurch gekennzeichnet, dass** zumindest eines der Folgenden gilt:
- das mindestens eine Auflageelement (82) ist von einem Seitenteil (40) der Schublade (28) gebildet oder umfasst;
- das mindestens eine Auflageelement (82) ist an einer Unterseite der Schublade (28) angeordnet oder gebildet, insbesondere einer Unterseite des Seitenteils (40);
- das mindestens eine Auflageelement (82) umfasst, bezogen auf die Auszugsrichtung (44), einen dem mindestens einen Schwenkelement (76) vorgelagerten Auflagebereich (86).

8. Schubladenvorrichtung nach Anspruch 6 oder 7, **dadurch gekennzeichnet, dass** zumindest eines der Folgenden gilt:
- das mindestens eine Auflageelement (82) umfasst, bezogen auf die Auszugsrichtung (44), führend an der Schublade (28) einen Auflagebereich (88) zum Aufliegen auf dem mindestens einen Stützelement (84);
- das mindestens eine Auflageelement (82) umfasst, bezogen auf die Auszugsrichtung (44), einen dem mindestens einen Schwenkelement (76) nachgelagerten Auflagebereich (88), wobei vorzugsweise das mindestens eine Auflageelement (82), bezogen auf die Auszugsrichtung (44), hinten an der Schublade (28) einen Auflagebereich (86) zum Aufliegen auf dem mindestens einen Stützelement (84) umfasst;
- am mindestens einen Auflageelement (82) ist eine Ausnehmung (90) gebildet, und die Schubladenvorrichtung (26; 110) umfasst mindestens ein Anschlagelement (102), das beim Verschwenken der Schublade (28) um die Schwenkachse (78) in die Ausnehmung (90) eingreifen kann.

9. Schubladenvorrichtung nach Anspruch 8, **dadurch gekennzeichnet, dass** zumindest eines der Folgenden gilt:
- die Ausnehmung (90) ist, bezogen auf die Auszugsrichtung (44), dem mindestens einen Schwenkelement (76) vorgelagert am mindestens einen Auflageelement (82) gebildet;
- das mindestens eine Anschlagelement (102) liegt in der Kippstellung der Schublade (28) an einem Rand (92) der mindestens einen Ausnehmung (90) an;
- der Rand (92) umfasst zwei im Winkel zueinander ausgerichtete Randabschnitte (94, 96), und das mindestens eine Anschlagelement (102) liegt an zumindest einem Randabschnitt (94, 96) an.

10. Schubladenvorrichtung nach Anspruch 9, **dadurch gekennzeichnet, dass** zumindest eines der Folgenden gilt:
- der Winkel zwischen den Randabschnitten (94, 96) beträgt ungefähr 90°;
- das mindestens eine Anschlagelement (102) umfasst oder bildet zwei im Winkel zueinander ausgerichtete Abschnitte (98, 100) aus, wobei jeder Abschnitt (98, 100) an einem der Randabschnitte (94, 96) anliegt;
- ein Winkel zwischen der Erstreckung eines der Ausnehmung (90) in Auszugsrichtung (44) vorausgehenden Auflagebereiches (86) und dem nachfolgenden Randabschnitt (94, 96) beträgt ungefähr 30° bis 80°, vorzugsweise ungefähr 40° bis 70°.

11. Schubladenvorrichtung nach einem der Ansprüche 8 bis 10, **dadurch gekennzeichnet, dass** das mindestens eine Anschlagelement (102) in der Kippstellung der Schublade (28) formschlüssig in die Ausnehmung (90) eingreift.

12. Schubladenvorrichtung nach einem der Ansprüche 6 bis 11, **dadurch gekennzeichnet, dass** zumindest eines der Folgenden gilt:
- das mindestens eine Stützelement (84) umfasst mindestens ein Anschlagelement (102) für die Schublade (28) in deren Kippstellung oder bildet ein solches Anschlagelement (102) aus;
- das mindestens eine Stützelement (84) ist unterhalb der Schublade (28) angeordnet;
- das mindestens eine Stützelement (84) ist plattenförmig ausgestaltet;
- das mindestens eine Stützelement (84) ist ein Basisteil (14) des Reinigungswagens (10), an dem Rollen (16) des Reinigungswagens (10) gehalten sind.

13. Schubladenvorrichtung nach einem der Ansprüche 6 bis 8 oder 12, **dadurch gekennzeichnet, dass** am mindestens einen Stützelement (84), bezogen auf die Auszugsrichtung (44) vorne, mindestens eine Ausnehmung (114) gebildet ist und dass die Schubladenvorrichtung (110) mit dem mindestens einen Auflageelement (82) beim Verschwenken der Schublade (28) um die Schwenkachse (78) in die Ausnehmung (114) eingreift, vorzugsweise dass das mindestens eine Auflageelement (82) in der Kippstellung der Schublade (28) an einem Rand (118) der mindestens einen Ausnehmung (114) anliegt.

14. Schubladenvorrichtung nach einem der voranstehenden Ansprüche, **dadurch gekennzeichnet, dass** die Schubladenvorrichtung (26; 110) eine weitere Schublade (28) umfasst, die an mindestens einer gemeinsamen Führungseinrichtung (60) mit der Schublade (28) gehalten ist, wobei die weitere Schublade (28) in eine Auszugsrichtung (44') von einer eingeschobenen Stellung in eine Auszugsstellung überführbar ist, die der Auszugsrichtung (44) der Schublade (28) entgegengesetzt ist., vorzugsweise dass die weitere Schublade (28) relativ zur mindestens einen Führungseinrichtung (60) von der Auszugsstellung in eine Kippstellung schwenkbar ist.

15. Schubladenvorrichtung nach einem der voranstehenden Ansprüche, **dadurch gekennzeichnet, dass** zumindest eines der Folgenden gilt:
- das mindestens eine Schwenkelement (76) ist, bezogen auf die Erstreckung der Schublade (28) entlang der Auszugsrichtung (44), in dessen Mitte oder im Wesentlichen in dessen Mitte angeordnet;
- das mindestens eine Schwenkelement (76) ist auf einer Schwerpunktsachse oder im Wesentlichen auf einer Schwerpunktsachse der Schublade (28) angeordnet;
- das mindestens eine Schwenkelement (76) ist, bezogen auf eine Höhenrichtung der Schublade, unterhalb von dessen Mitte angeordnet;
- das mindestens eine Schwenkelement (76) ist, bezogen auf die Höhenrichtung, an einem unteren Rand der Schublade (28) angeordnet.

16. Schubladenvorrichtung nach einem der voranstehenden Ansprüche, **dadurch gekennzeichnet, dass** zumindest eines der Folgenden gilt:
- ein Winkel beim Verschwenken der Schublade (28) von der Auszugsstellung in die Kippstellung beträgt ungefähr 10° bis 60°, vorzugsweise ungefähr 20° bis 50°;
- die Schublade (28) umfasst ein Rahmenteil (36) und ein behälterförmiges Einsetzteil (38), das lösbar in das Rahmenteil (36) einsetzbar ist, wobei vorzugsweise das Rahmenteil (36) Seitenteile (40) und die Seitenteile (40) quer und insbesondere senkrecht zur Auszugsrichtung (44) verbindende Verbindungselemente (46) umfasst und dass das Einsetzteil (38) an den Verbindungselementen (46) einhängbar ist.

17. Reinigungswagen umfassend eine Trageinrichtung (12) mit daran gehaltenen Rollen (16) zum Verfahren auf einer Aufstellfläche (18) und mindestens eine Schubladenvorrichtung (26) nach einem der voranstehenden Ansprüche.

18. Reinigungswagen nach Anspruch 17, **dadurch gekennzeichnet, dass** zumindest eines der Folgenden gilt:
- die Trageinrichtung (12) umfasst ein insbesondere plattenförmiges Basisteil (14), das ein Stützelement (84) der Schubladenvorrichtung (26) für die Schublade (28) ausbildet;
- der Reinigungswagen (10) umfasst ein Gehäuse (24) mit im Abstand zueinander angeordneten Seitenwänden (40) oder bildet ein solches Gehäuse aus, zwischen denen die Schublade (28) angeordnet ist, wobei Führungskörper (62) der Schubladenvorrichtung (26; 110) am Gehäuse (24) festgelegt oder festlegbar sind oder wobei die Seitenwände (40) Führungskörper (62) der Schubladenvorrichtung (26) ausbilden;
- die Schubladenvorrichtung (26; 110) ist oder bildet eine vormontierte Baueinheit (81), die an einem Gehäuse (24) des Reinigungswagens (10) festlegbar ist.

## Claims

1. A drawer apparatus for a cleaning trolley (10), comprising a drawer (28) having a receiving space (54), at least one guide device (60) via which the drawer (28) on the cleaning trolley (10) is movable from a pushed-in position to a pulled-out position in a pull-out direction (44), and at least one coupling element (74) for coupling the drawer (28) to the guide device (60), **characterized in that**
the at least one coupling element (74) is a pivot element (76) for pivotably mounting the drawer (28) on the at least one guide device (60), in the pulled-out position the drawer (28) being pivotable relative to the at least one guide device (60) about a pivot axis (78) that is oriented transversely and in particular perpendicularly to the pull-out direction (44), such as to assume a tilted position.

2. The drawer apparatus in accordance with Claim 1, **characterized in that** one of the following applies:
- the at least one guide device (60) comprises at least one guide element (64) to which the at least one pivot element (76) is pivotably connected, and at least one guide body (62) on which the at least one guide element (64) is mounted so as to be displaceable in the pull-out direction (44);
- the at least one guide device (60) comprises at least one guide body (62) on which the at least one pivot element (76) is mounted so as to be displaceable in the pull-out direction (44);
preferably the at least one guide body (62) being plate-shaped or substantially plate-shaped.

3. The drawer apparatus in accordance with Claim 2, **characterized in that** the at least one guide body (62) is fixed or fixable to a housing (24) of the cleaning trolley (10), or **in that** the at least one guide body (62) is formed by a housing wall, in particular a sidewall (22), of the cleaning trolley (10).

4. The drawer apparatus in accordance with any one of the preceding Claims, **characterized in that** at least one of the following applies:
- a stop element for the at least one guide element (64) or the at least one pivot element (76) is formed on the at least one guide body (62), against which stop element the guide element (64) or the pivot element (76) rests in the pulled-out position and/or in the tilted position of the drawer (28);
- corresponding stop elements (104) are arranged on the drawer (28) and on the guide device (60) and/or on the cleaning trolley (10) for limiting the pivoting angle of the drawer (28) when it is pivoted from the pulled-out position into the tilted position.

5. The drawer apparatus in accordance with any one of the preceding Claims, **characterized in that** the at least one pivot element (76) is arranged on a side part (40) of the drawer (28), with respect to a direction that is transverse and in particular perpendicular to the pull-out direction (44), and/or **in that** the drawer apparatus (26; 110) comprises two guide devices (60), between which the drawer (28) is arranged, and a respective pivot element (76) for coupling to one of the guide devices (60).

6. The drawer apparatus in accordance with any one of the preceding Claims, **characterized in that** the drawer apparatus (26; 110) comprises at least one support element (84) on which at least one contact element (82) of the drawer (28) rests during displacement.

7. The drawer apparatus in accordance with Claim 6, **characterized in that** at least one of the following applies:
- the at least one contact element (82) is formed or comprised by a side part (40) of the drawer (28);
- the at least one contact element (82) is arranged or formed on an underside of the drawer (28), in particular on an underside of the side part (40);
- the at least one contact element (82) comprises, with respect to the pull-out direction (44), a contact region (86) upstream of the at least one pivot element (76).

8. The drawer apparatus in accordance with Claim 6 or Claim 7,
**characterized in that** at least one of the following applies:
- the at least one contact element (82) comprises, leading with respect to the pull-out direction (44), a contact region (88) along the drawer (28) for resting on the at least one support element (84);
- the at least one contact element (82) comprises, with respect to the pull-out direction (44), a contact region (88) downstream of the at least one pivot element (76), preferably the at least one contact element (82) comprising, with respect to the pull-out direction (44), a contact region (86) at the back of the drawer (28) for resting on the at least one support element (84);
- a recess (90) is formed on the at least one contact element (82), and the drawer apparatus (26; 110) comprises at least one stop element (102) which is configured to engage in the recess (90) when the drawer (28) is pivoted about the pivot axis (78).

9. The drawer apparatus in accordance with claim 8, **characterized in that** at least one of the following applies:
- the recess (90) is formed on the at least one contact element (82) upstream of the at least one pivot element (76) with respect to the pull-out direction (44);
- the at least one stop element (102) rests against an edge (92) of the at least one recess (90) in the tilted position of the drawer (28);
- the edge (92) comprises two edge portions (94, 96) that are at an angle to one another, and the at least one stop element (102) rests against at least one edge portion (94, 96).

10. The drawer apparatus in accordance with claim 9, **characterized in that** at least one of the following applies:
- the angle between the edge portions (94, 96) is approximately 90°;
- the at least one stop element (102) comprises or forms two portions (98, 100) that are at an angle to one another, each portion (98, 100) resting against one of the edge portions (94, 96);
- an angle between the extension of a contact region (86) preceding the recess (90) in the pull-out direction (44) and the succeeding edge portion (94, 96) is approximately 30° to 80°, preferably approximately 40° to 70°.

11. The drawer apparatus in accordance with any one of claims 8 to 10, **characterized in that,** in the tilted position of the drawer (28), the at least one stop element (102) engages in a positive-locking manner in the recess (90).

12. The drawer apparatus in accordance with any one of claims 6 to 11, **characterized in that** at least one of the following applies:
- the at least one support element (84) comprises at least one stop element (102) for the drawer (28) in its tilted position or forms such a stop element (102);
- the at least one support element (84) is arranged below the drawer (28);
- the at least one support element (84) is plate-shaped;
- the at least one support element (84) is a base part (14) of the cleaning trolley (10) on which rollers (16) of the cleaning trolley (10) are held.

13. The drawer apparatus in accordance with any one of claims 6 to 8 or 12, **characterized in that** at least one recess (114) is formed at the front of the at least one support element (84), with respect to the pull-out direction (44), and **in that** the drawer apparatus (110) with the at least one contact element (82) engages in the recess (114) when the drawer (28) is pivoted about the pivot axis (78), preferably **in that** the at least one contact element (82) rests against an edge (118) of the at least one recess (114) in the tilted position of the drawer (28).

14. The drawer apparatus in accordance with any one of the preceding claims, **characterized in that** the drawer apparatus (26; 110) comprises a further drawer (28) which is held on at least one common guide device (60) with the drawer (28), the further drawer (28) being transferable from a pushed-in position to a pulled-out position in a pull-out direction (44') which is opposite to the pull-out direction (44) of the drawer (28), preferably **in that** the further drawer (28) is pivotable with respect to the at least one guide device (60) from the pulled-out position into a tilted position.

15. The drawer apparatus in accordance with any one of the preceding claims, **characterized in that** at least one of the following applies:
- the at least one pivot element (76) is arranged, with respect to the extension of the drawer (28) in the pull-out direction (44), in the center thereof or substantially in the center thereof;
- the at least one pivot element (76) is arranged on a center of gravity axis or substantially on a center of gravity axis of the drawer (28);
- the at least one pivot element (76) is arranged, with respect to a vertical direction of the drawer, below the center thereof;
- the at least one pivot element (76) is arranged, with respect to the vertical direction, at a lower edge of the drawer (28).

16. The drawer apparatus in accordance with any one of the preceding claims, **characterized in that** at least one of the following applies:
- an angle when pivoting the drawer (28) from the pulled-out position into the tilted position is approximately 10° to 60°, preferably approximately 20° to 50°;
- the drawer (28) comprises a frame part (36) and a container-like insert part (38) which is releasably insertable into the frame part (36), wherein preferably the frame part (36) comprises side parts (40) and connecting elements (46) that connect the side parts (40) transversely and, in particular, perpendicularly, to the pull-out direction (44), and **in that** the insert part (38) is mountable on the connecting elements (46).

17. A cleaning trolley comprising a support device (12) having rollers (16) held thereon for moving on a set-down surface (18), and at least one drawer apparatus (26) as per any one of the preceding claims.

18. The cleaning trolley in accordance with claim 17, **characterized in that** at least one of the following applies:
- the support device (12) comprises an in particular plate-shaped base part (14) which forms a support element (84) of the drawer apparatus (26) for the drawer (28);
- the cleaning trolley (10) comprises or forms a housing (24) with sidewalls (40) arranged at a distance from one another, between which the drawer (28) is arranged, wherein guide bodies (62) of the drawer apparatus (26; 110) are fixed or fixable to the housing (24), or the sidewalls (40) form guide bodies (62) of the drawer apparatus (26);
- the drawer apparatus (26; 110) is or forms a preassembled modular unit (81) which is fixable to a housing (24) of the cleaning trolley (10).

## Revendications

1. Dispositif à tiroirs pour un chariot de nettoyage (10), comprenant un tiroir (28) avec un espace de réception (54), au moins un dispositif de guidage (60) par lequel le tiroir (28) peut être déplacé sur le chariot de nettoyage (10) d'une position insérée le long d'une direction d'extension (44) dans une position d'extension, et au moins un élément d'accouplement (74) pour accoupler le tiroir (28) au dispositif de guidage (60),
**caractérisé en ce que**
le au moins un élément d'accouplement (74) est un élément pivotant (76) pour monter de manière pivotante le tiroir (28) sur le au moins un dispositif de guidage (60), où le tiroir (28) peut pivoter dans une position de basculement dans la position d'extension par rapport au au moins un dispositif de guidage (60) autour d'un axe de pivotement (78) dirigé transversalement et en particulier perpendiculairement à la direction d'extension (44).

2. Dispositif à tiroirs selon la revendication 1, **caractérisé en ce que** l'une des conditions suivantes s'applique:
- le au moins un dispositif de guidage (60) comprend au moins un élément de guidage (64) avec lequel le au moins un élément pivotant (76) est relié de manière pivotante, et au moins un corps de guidage (62), sur lequel le au moins un élément de guidage (64) est monté déplaçable le long de la direction d'extension (44);
- le au moins un dispositif de guidage (60) comprend au moins un corps de guidage (62) sur lequel le au moins un élément pivotant (76) est monté déplaçable le long de la direction d'extension (44);
où de préférence, le au moins un corps de guidage (62) est en forme de plaque ou sensiblement en forme de plaque.

3. Dispositif à tiroirs selon la revendication 2, **caractérisé en ce que** le au moins un corps de guidage (62) est fixé ou peut être fixé sur un boîtier (24) du chariot de nettoyage (10) ou **en ce que** le au moins un corps de guidage (62) est formé par une paroi de boîtier, en particulier une paroi latérale (22), du chariot de nettoyage (10).

4. Dispositif à tiroirs selon l'une des revendications précédentes, **caractérisé en ce qu'**au moins l'une des conditions suivantes s'applique:
- sur l'au moins un corps de guidage (62) est formé un élément de butée pour le au moins un élément de guidage (64) ou forme le au moins un élément pivotant (76) sur lequel l'élément de guidage (64) ou l'élément pivotant (76) s'appuie dans la position d'extension et/ou dans la position de basculement du tiroir (28);
- des éléments de butée (104) correspondants sont disposés sur le tiroir (28) et sur le dispositif de guidage (60) et/ou sur le chariot de nettoyage (10) pour limiter l'angle de pivotement du tiroir (28) lors du pivotement de la position d'extension dans la position de basculement.

5. Dispositif à tiroirs selon l'une des revendications précédentes, **caractérisé en ce que** le au moins un élément pivotant (76) est disposé sur une partie latérale (40) du tiroir (28), par rapport à une direction transversale et en particulier perpendiculaire à la direction d'extension (44), et/ou **en ce que** le dispositif à tiroirs (26; 110) comprend deux dispositifs de guidage (60), entre lesquels le tiroir (28) est disposé, et un élément pivotant (76) respectif pour l'accouplement à l'un des dispositifs de guidage (60).

6. Dispositif à tiroirs selon l'une des revendications précédentes, **caractérisé en ce que** le dispositif à tiroirs (26; 110) comprend au moins un élément de soutien (84) sur lequel le tiroir (28) repose lors du pivotement par le biais d'au moins un élément de support (82).

7. Dispositif à tiroirs selon la revendication 6, **caractérisé en ce qu'**au moins l'une des conditions suivantes s'applique:
- le au moins un élément de support (82) est formé par ou comprend une partie latérale (40) du tiroir (28);
- le au moins un élément de support (82) est disposé ou formé sur un côté inférieur du tiroir (28), en particulier sur un côté inférieur de la partie latérale (40);
- le au moins un élément de support (82) comprend, par rapport à la direction d'extension (44), une zone de support (86) située devant le au moins un élément pivotant (76).

8. Dispositif à tiroirs selon la revendication 6 ou 7, **caractérisé en ce qu'**au moins l'une des conditions suivantes s'applique:
- le au moins un élément de support (82) comprend, par rapport à la direction d'extension (44), guidant au niveau du tiroir (28) une zone de support (88) pour reposer sur le au moins un élément de soutien (84);
- le au moins un élément de support (82) comprend, par rapport à la direction d'extension (44), une zone de support (88) en aval du au moins un élément pivotant (76), où de préférence le au moins un élément de support (82), par rapport à la direction d'extension (44), comprend derrière sur le tiroir (28), une zone de support (86) pour reposer sur le au moins un élément de soutien (84);
- un évidement (90) est formé sur le au moins un élément de support (82), et le dispositif à tiroirs (26; 110) comprend au moins un élément de butée (102) qui peut s'insérer dans l'évidement (90) lors du pivotement du tiroir (28) autour de l'axe de pivotement (78).

9. Dispositif à tiroirs selon la revendication 8, **caractérisé en ce qu'**au moins l'une des conditions suivantes s'applique:
- l'évidement (90), par rapport à la direction d'extension (44), est formé en amont du au moins un élément pivotant (76) sur le au moins un élément de support (82);
- le au moins un élément de butée (102) repose contre un bord (92) du au moins un évidement (90) dans la position de basculement du tiroir (28);
- le bord (92) comprend deux tronçons de bord (94, 96) orientés selon un angle l'un par rapport à l'autre, et le au moins un élément de butée (102) repose sur au moins un tronçon de bord (94, 96).

10. Dispositif à tiroirs selon la revendication 9, **caractérisé en ce qu'**au moins l'une des conditions suivantes s'applique:
- l'angle entre les tronçons de bord (94, 96) est d'environ 90°;
- le au moins un élément de butée (102) comprend ou forme deux tronçons (98, 100) orientés selon un angle l'un par rapport à l'autre, où chaque tronçon (98, 100) repose sur l'un des tronçons de bord (94, 96);
- un angle entre l'étendue d'une zone de support (86) précédant l'évidement (90) dans la direction d'extension (44) et le tronçon de bord (94, 96) suivant est d'environ 30° à 80°, de préférence d'environ 40° à 70°.

11. Dispositif à tiroirs selon l'une des revendications 8 à 10, **caractérisé en ce que** le au moins un élément de butée (102) s'insère par assemblage de forme dans l'évidement (90) dans la position de basculement du tiroir (28).

12. Dispositif à tiroirs selon l'une des revendications 6 à 11, **caractérisé en ce qu'** au moins l'une des conditions suivantes s'applique:
- le au moins un élément de soutien (84) comprend au moins un élément de butée (102) pour le tiroir (28) dans sa position de basculement ou forme un tel élément de butée (102);
- le au moins un élément de soutien (84) est disposé sous le tiroir (28);
- le au moins un élément de soutien (84) est conçu sous la forme d'une plaque;
- le au moins un élément de soutien (84) est une partie de base (14) du chariot de nettoyage (10), sur laquelle sont maintenues des roulettes (16) du chariot de nettoyage (10).

13. Dispositif à tiroirs selon l'une des revendications 6 à 8 ou 12, **caractérisé en ce qu'**au moins un évidement (114) est formé sur le au moins un élément de support (84), devant par rapport à la direction d'extension (44), et **en ce que** le dispositif à tiroirs (110) avec le au moins un élément de support (82) s'engage dans l'évidement (114) lors du pivotement du tiroir (28) autour de l'axe de pivotement (78), de préférence **en ce que** le au moins un élément de support (82) dans la position de basculement du tiroir (28) repose sur un bord (118) du au moins un évidement (114).

14. Dispositif à tiroirs selon l'une des revendications précédentes, **caractérisé en ce que** le dispositif à tiroirs (26; 110) comprend un autre tiroir (28) qui est maintenu sur au moins un dispositif de guidage commun (60) avec le tiroir (28), où l'autre tiroir (28) peut être déplacé dans une direction d'extension (44') d'une position insérée dans une position d'extension qui est opposée à la direction d'extension (44) du tiroir (28), de préférence **en ce que** l'autre tiroir (28) peut pivoter par rapport au au moins un dispositif de guidage (60) de la position d'extension dans une position de basculement.

15. Dispositif à tiroirs selon l'une des revendications précédentes, **caractérisé en ce qu'**au moins l'une des conditions suivantes s'applique:
- le au moins un élément pivotant (76) est disposé, par rapport à l'étendue du tiroir (28) le long de la direction d'extension (44), en son milieu ou sensiblement en son milieu;
- le au moins un élément pivotant (76) est disposé sur un axe de centre de gravité ou sensiblement sur un axe de centre de gravité du tiroir (28);
- le au moins un élément pivotant (76) est disposé, par rapport à une direction de la hauteur du tiroir, en dessous de son milieu;
- le au moins un élément pivotant (76) est disposé, par rapport à la direction de la hauteur, au niveau d'un bord inférieur du tiroir (28).

16. Dispositif à tiroirs selon l'une des revendications précédentes, **caractérisé en ce qu'**au moins l'une des conditions suivantes s'applique:
- un angle lors du pivotement du tiroir (28) de la position d'extension dans la position de basculement est d'environ 10° à 60°, de préférence d'environ 20° à 50°;
- le tiroir (28) comprend une partie cadre (36) et une partie d'insertion (38) en forme de récipient qui peut être insérée de manière amovible dans la partie cadre (36), où de préférence la partie cadre (36) comprend des parties latérales (40) et des éléments de liaison (46) reliant les parties latérales (40) transversalement et en particulier perpendiculairement à la direction d'extension (44) et **en ce que** la partie d'insertion (38) peut être accrochée aux éléments de liaison (46).

17. Chariot de nettoyage comprenant un dispositif porteur (12) avec des roulettes (16) maintenues sur celui-ci pour se déplacer sur une surface d'appui (18) et au moins un dispositif à tiroirs (26) selon l'une des revendications précédentes.

18. Chariot de nettoyage selon la revendication 17, **caractérisé en ce qu'**au moins l'une des conditions suivantes s'applique:
- le dispositif porteur (12) comprend une partie de base (14), en particulier sous forme d'une plaque, qui forme un élément de soutien (84) du dispositif à tiroirs (26) pour le tiroir (28);
- le chariot de nettoyage (10) comprend un boîtier (24) avec des parois latérales (40) disposées à distance les unes des autres ou forme un tel boîtier, entre lesquelles est disposé le tiroir (28), où des corps de guidage (62) du dispositif à tiroirs (26; 110) sont fixés ou peuvent être fixés au boîtier (24) ou bien où les parois latérales (40) forment des corps de guidage (62) du dispositif à tiroirs (26);
- le dispositif à tiroirs (26; 110) est ou forme une unité structurelle prémontée (81) qui peut être fixée sur un boîtier (24) du chariot de nettoyage (10).
